Europäisches Patentamt

European Patent Office

Office européen des brevets

(11) Veröffentlichungsnummer: **0 254 191**
**A1**

## (12) EUROPÄISCHE PATENTANMELDUNG

(21) Anmeldenummer: **87110192.9**

(51) Int. Cl.⁴: **B60R 13/10**

(22) Anmeldetag: **15.07.87**

(30) Priorität: **21.07.86 DE 3624552**

(43) Veröffentlichungstag der Anmeldung:
**27.01.88 Patentblatt 88/04**

(84) Benannte Vertragsstaaten:
**AT BE CH DE ES FR GB GR IT LI LU NL SE**

(71) Anmelder: **Schieren, Hans-Dieter**
**Horn 67**
**D-4715 Ascheberg-Herbern(DE)**

Anmelder: **Schieren, Monika**
**Horn 67**
**D-4715 Ascheberg-Herbern(DE)**

(72) Erfinder: **Schieren, Hans-Dieter**
**Horn 67**
**D-4715 Ascheberg-Herbern(DE)**

(74) Vertreter: **Patentanwälte Wenzel & Kalkoff**
**Flasskuhle 6 Postfach 2448**
**D-5810 Witten(DE)**

(54) **Verfahren zur Diebstahlsicherung von Kraftfahrzeugen.**

(57) Die Erfindung betrifft ein Verfahren zur Diebstahlsicherung von Kraftfahrzeugen, bei dem die Kennzeichnung als Buchstaben-und/oder Ziffernfolge an allen Glasscheiben und Deckgläsern von Beleuchtungskörpern angebracht wird und außerdem dieselbe Kennzeichnung in einer gesonderten Kartei vermerkt wird, in der Angaben über das Fahrzeug und den Halter unter der jeweiligen Kennzeichnung verzeichnet werden. Durch den Abgleich der sichtbaren Kennzeichen eines Fahrzeuges mit den Daten der Kartei kann die Identität eines Fahrzeuges und damit die Rechtmäßigkeit seines Besitzers sehr leicht festgestellt werden.

EP 0 254 191 A1

## Verfahren zur Diebstahlsicherung von Kraftfahrzeugen

Die Erfindung betrifft ein Verfahren zur Diebstahlsicherung von Kraftfahrzeugen, bei dem das Fahrzeug mit einer gesonderten Kennzeichnung versehen wird, die mit einer kontrollierbaren Kennzeichnung an anderer Stelle übereinstimmt.

Es ist bekannt, Kraftfahrzeuge mit einer zusätzlichen Kennzeichnung auszustatten. In der europäischen Patentanmeldung mit der Veröffentlichungsnr. 6641 wird eine Kennzeichnung vorgestellt, bei das Fahrzeug mit dem amtlichen Kennzeichen zusätzlich an der Karosserie und/oder an den Scheiben versehen wird. Die Kennzeichnung erfolgt durch eine ätzende Paste, die zu einer Markierung führt.

Diese Art der Kennzeichnung ist insofern nachteilig, als bei einem Wohnortwechsel bzw. bei einem Verkauf des Kraftfahrzeuges und dem damit verbundenen Wechsel des amtlichen Kennzeichens das Fahrzeug zwei unterschiedliche "amtliche" Kennzeichen besitzen würde. Allein diese Tatsache genügt, um das Fahrzeug als gestohlen zu verdächtigen. Dadurch kann es zu ungerechtfertigten Belästigungen des Halters kommen, der fälschlicherweise eines Diebstahls bezichtigt wird. Die Wirkung als Diebstahlsicherung ist gering.

Der Erfindung liegt die Aufgabe zugrunde, ein Verfahren zur Diebstahlsicherung von Kraftfahrzeugen vorzuschlagen, das abschreckend auf potentielle Fahrzeugdiebe wirkt, einen rechtmäßigen Halter vor Verdächtigungen schützt und die Bestimmung eines Fahrzeuges ohne Kennzeichen mit zerstörter Fahrgestellnummer gestattet.

Zur Lösung dieser Aufgabe schlägt die Erfindung vor, daß die Kennzeichnung als Buchstaben- und/oder Ziffernfolge an allen Glasscheiben und Deckgläsern von Beleuchtungskörpern angebracht wird, und daß eine gesonderte Kartei angelegt wird, in der Angaben über das Fahrzeug und den Halter unter der jeweiligen Kennzeichnung verzeichnet werden. Der heutigen Zeigt entsprechend wird die Kartei vorzugsweise als elektronische Datei angelegt, die von den unterschiedlichsten Stellen aus befragt werden kann. Diese Stellen sind vorzugsweise Polizeidienststellen oder Versicherungsgesellschaften, die über eine mit den Behörden abgestimmte Organisation verfügen.

Die bisher bei der Kennzeichnung von Glasscheiben verfolgten Ziele einer Abschreckungswirkung gegen Diebstahl, weil der Austausch der Glasscheiben unrentabel ist, wird auch von der Erfindung angestrebt, wobei die Kennzeichnung auf Leucheinheiten ausgedehnt wird, was die Wirkung der Abschreckung noch vergrößert.

Eine weitere Besonderheit der Erfindung liegt darin, daß die Zuordnung eines Fahrzeuges zu einem Halter oder einem Standort auch dann möglich ist, wenn alle herkömmlichen, relativ leicht zu beseitigenden Kennzeichnungen entfernt worden sind. Dazu gehören in erster Linie das amtliche Kennzeichen sowie ein Typenschild bzw. eine Fahrgestellnummer; letztere können relativ leicht entfernt bzw. unkenntlich gemacht werden. Ehe jedoch sämtliche zusätzlichen Kennzeichnungen an den Fensterscheiben und den Beleuchtungskörpern entfernt sind, ist ein Fahrzeug schon so stark "ausgeschlachtet", daß die Weiterverwendung oder Wiederverwendung durch einen illegalen Benutzer besonders unwahrscheinlich ist.

Da die Kennzeichnung gemäß der Erfindung nicht mit einer Kennzeichnung am Fahrzeug verglichen wird sondern mit einer Kartei oder einen elektronischen Datei, kommt es zu keinen falschen Verdächtigungen eines legalen Halters, solange die Kartei bzw. Datei korrekt nachgeführt ist bzw. keine Auffälligkeit gemeldet ist, beispielsweise der Hinweis unter einer Kennzeichnung in der Datei vorhanden ist, daß das Fahrzeug als gestohlen gemeldet ist.

Zur Abschreckung eines Diebstahls bei verlorengegangenen und von fremden Personen aufgefundenen Fahrzeugpapieren und zur Erleichterung des Einlesens der Kennzeichnung als Suchkriterium bei Befragen der elektronischen Datei ist es zweckmäßig, die vom Benutzer eines Kraftfahrzeuges mitzuführende Bescheinigung mit derselben Kennzeichnung zu versehen. In der Bundesrepublik Deutschland braucht dann zum Beispiel nur der KFZ-Schein auf ein Lesegerät aufgelegt zu werden, um an Grenzen oder sonstigen Kontrollen eine Auffälligkeit unter dieser Kennzeichnung aus der elektronischen Datei abzufragen.

Wenn die Kennzeichnung der Fahrzeugpapiere mit Hilfe einer Perforierung erfolgt, ist die Fälschung ziemlich schwierig, so daß Manipulationen an der Kennzeichnung in den Fahrzeugpapieren entgegengewirkt wird.

Bei der Aufbringung der Kennzeichnung bedient sich die Erfindung bekannter Mittel, die Buchstaben-und/oder Zahlenfolge wird also durch Ätzen, Strahlen oder durch Gravieren aufgebracht, wobei insbesondere beim Ätzen und Strahlen eine Schablone benutzt wird.

Zur weiteren Abschreckung gegen die unrechtmäßige Entwendung eines Kraftfahrzeuges kann insbesondere an der Fahrertür die Kennzeichnung durch eine auf der Innenseite aufgeklebte Folie hervorgehoben sein, so daß sie für jedermann leicht zu erkennen ist. Die Hervorhebung kann durch einen Schriftzug unterstrichen sein, durch Piktogramme oder in sonstiger Weise, die geeignet ist, einen unbefugten Benutzer von der Entwendung des Fahrzeuges abzuhalten.

Bei der Speicherung von Fahrzeugdaten sind insbesondere leicht kontrollierbare Angaben aufzunehmen, wie zum Beispiel die Fahrzeugfarbe, die Ausstattung, die Anzahl der Türen und selbstverständlich die Fahrgestellnummer und das amtliche Kennzeichen. Solange diese Daten sowie die Halterdaten bei Verkäufen und technischen Änderungen am Fahrzeug nachgeführt werden, ist eine stets korrekte Kontrollfunktion in Form der elektronischen Datei vorhanden, die zu jeder Tages-und Nachtzeit die Überprüfung eines Fahrzeuges auf seinen gemeldeten Zustand erlaubt. Selbst wenn derartige Daten nicht nachgeführt werden, bleibt ein Fahrzeugeigentümer, der diesen Dingen gegenüber gleichgültig ist, unbehelligt, solange das Fahrzeug nicht als gestohlen gemeldet gilt.

## Ansprüche

1. Verfahren zur Diebstahlsicherung von Kraftfahrzeugen, bei dem das Fahrzeug mit einer gesonderten Kennzeichnung versehen wird, die mit einer kontrollierbaren Kennzeichnung an anderer Stelle übereinstimmt, dadurch **gekennzeichnet** , daß die Kennzeichnung als Buchstaben - und/oder Ziffernfolge an allen Glasscheiben und Deckgläsern von Beleuchtungskörpern angebracht wird, und daß eine gesonderte Kartei angelegt wird, in der Angaben über das Fahrzeug und den Halter unter der jeweiligen Kennzeichnung verzeichnet werden.

2. Verfahren nach Anspruch 1, dadurch **gekennzeichnet**, daß als Kartei eine elektronische Datei angelegt wird.

3. Verfahren nach Anspruch 1 oder 2, dadurch **gekennzeichnet**, daß die vom Benutzer eines Kraftfahrzeuges mitzuführende Bescheinigung mit derselben Kennzeichnung versehen wird.

4. Verfahren nach Anspruch 3, dadurch **gekennzeichnet**, daß die Kennzeichnung der Bescheinigung mit Hilfe eines Perforierungsmusters durchgeführt wird.

5. Verfahren nach einem der Ansprüche 1 bis 3, dadurch **gekennzeichnet**, daß die Kennzeichnung durch Ätzen, Strahlen oder Gravieren aufgebracht wird, insbesondere unter Benutzung einer Schablone.

6. Verfahren nach einem der Ansprüche 1 bis 3 oder nach Anspruch 5, dadurch **gekennzeichnet**, daß die Kennzeichnung der Fahrertür durch eine von innen auf die Scheibe aufgeklebte Folie hervorgehoben wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 585 514 (SCALLAN)<br>* Spalte 1, Zeile 19 - Spalte 2, Zeile 2 * | 1,2,5 | B 60 R 13/10 |
| X | AU-B- 531 407 (LEVIN et al.)<br>* Seite 6, Zeile 14 - Seite 7, Zeile 9 * | 1 | |
| X | BE-A- 783 001 (PRUD'HOMME)<br>* Seite 2, Zeilen 17-21; Seite 3, Zeile 29 - Seite 4, Zeile 14 * | 1,5 | |
| Y | | 2-4 | |
| Y | DE-A-3 030 179 (LIE)<br>* Seite 9, Zeilen 4-17; Seite 18, Zeilen 14-24 * | 2-4 | |
| | | | RECHERCHIERTE SACHGEBIETE (Int. Cl.4) |
| D,X | EP-A-0 006 641 (KODRON)<br>* Figur 2; Anspruch 1 * | 1,5 | B 60 R 13/00 |
| A | GB-A- 210 392 (JONES NATIONAL AUTOMOBILE REGISTRATION)<br>* Seite 3, Zeilen 13-35 * | 1,3 | |
| A | US-A-1 473 556 (IAFRATE)<br>* Figur 1 * | 6 | |

Der vorliegende Recherchenbericht wurde für alle Patentansprüche erstellt.

| Recherchenort | Abschlußdatum der Recherche | Prüfer |
|---|---|---|
| BERLIN | 15-09-1987 | STANDRING M A |